# EUROPÄISCHE PATENTSCHRIFT

(11) **EP 0 771 392 B1**
(45) Veröffentlichungstag und Bekanntmachung des Hinweises auf die Patenterteilung: **15.04.1998**
(21) Anmeldenummer: 95925686.8
(22) Anmeldetag: 13.07.1995
(51) Int. Cl.: F02B 27/02

(54) **LUFTANSAUGVORRICHTUNG MIT VARIABLER SAUGROHRLÄNGE**
AIR INTAKE DEVICE WITH INTAKE PIPES OF VARIABLE LENGTH
DISPOSITIF D'ADMISSION D'AIR AVEC PIPES D'ADMISSION DE LONGUEUR VARIABLE

(30) Priorität: 15.07.1994 DE 4425044; 30.06.1995 DE 29510694 U
(43) Veröffentlichungstag der Anmeldung: 07.05.1997
(73) Patentinhaber: SIEMENS AKTIENGESELLSCHAFT, 80333 München (DE)
(72) Erfinder: ESPE, Carsten, D-93107 Thalmassing (DE); FISCHER, Peter, D-93049 Regensburg (DE)
(86) Internationale Anmeldenummer: DE9500917
(87) Internationale Veröffentlichungsnummer: WO9602743

(56) Entgegenhaltungen:
- EP-A- 0 586 123
- WO-A-94/05901
- FR-A- 2 682 431
- US-A- 4 932 369

## Beschreibung

Die Erfindung betrifft eine Luftansaugvorrichtung für eine Brennkraftmaschine nach dem Oberbegriff von Patentanspruch 1. Demnach richtet sich die Erfindung auf variable bzw. zwischen zwei Längen einstellbare Saugrohre, wobei die Saugrohrlänge jeweils an den Betriebszustand einer Brennkraftmaschine angepaßt werden kann. Damit kann u.a. die Motorleistung gesteigert, der Kraftstoffverbrauch gesenkt und die Schadstoffemission verringert werden.

Eine derartige Vorrichtung ist beispielsweise durch die DE-87 04 464 U bekannt, bei der bogenförmige Saugrohrstücke durch eine Antriebsvorrichtung ineinander verschiebbar sind, um die Saugrohrlange variabel zu gestalten. Eine derartige Vorrichtung hat jedoch den Nachteil, daß die Dichtigkeit der Saugrohre im Überlappungsbereich nur in aufwendiger Weise beherrschbar ist.

Weiter ist eine Luftansaugvorrichtung bekannt, bei der jedes Saugrohr auf seinem Weg vom Sammler zum Zylinder der Brennkraftmaschine einen Durchbruch aufweist, der über ein kurzes Rohrstück mit dem Sammler in Verbindung steht. In diesem Rohrstück ist eine Klappe angeordnet, die drehbar ist und je nach dem Betriebszustand der Brennkraftmaschine das Innere des Rohrstücks verschließt oder öffnet. Aufgrund der gekrümmten Form der Saugrohre und der kurzen Rohrstücke ist ein bündiges Verschließen des Einmündungsbereichs mit dieser Klappe nicht möglich, das heißt, die Klappe muß etwas in das kurze Rohrstück zurückversetzt werden. Damit entsteht vor der Klappe in Richtung auf das dem Zylinder zugewandte Saugrohr bei geschlossener Klappe ein sogenanntes Totvolumen, das die Strömung der Ansaugluft nachteilig beeinflußt.

Weiter ist durch die W093/00505 eine Luftansaugvorrichtung bekannt, bei der die effektive Länge von Saugrohren zwischen Zylindern einer Brennkraftmaschine und einem oder mehreren Sammlern je nach Betriebszustand der Brennkraftmaschine geändert werden kann. Dies geschieht durch Vorsehen einer Öffnung in einem bestimmten Bereich jeweils eines Saugrohrs, das an einen Sammler angrenzt, wobei die Öffnung durch eine Klappe verschließbar ist, so daß ein langes Saugrohr gebildet wird. Im geöffneten Zustand der Klappe verschließt die Klappe einen Teil eines Saugrohrs und gibt damit den kürzeren Weg zwischen Sammler und kurzem Saugrohrbereich zum Zylinderkopf der Brennkraftmaschine frei. Die Klappe ist einseitig am Grenzbereich zwischen Saugrohr und Sammler gelagert. Es ist allgemein bekannt, daß im Betrieb einer Brennkraftmaschine pulsierende Rückströmungen auftreten. Diese Rückströmungen werden nun dazu führen, daß die Klappe dadurch in Schwingungen gerät bzw. klappert, was neben einer unerwünschten Geräuschbildung einen stabilen Betrieb der Brennkraftmaschine beeinträchtigen kann, wenn nicht erhebliche Betätigungs- und Schließkräfte zur Betätigung der Klappe aufgebracht werden.

Es ist Aufgabe der Erfindung, eine Luftansaugvorrichtung bereitzustellen, bei der die einzelnen Saugrohre bezüglich ihrer effektiven Länge variabel ausgebildet werden, ohne Strömungsverluste oder Störungen der Luftströmung, wie Abrißwirbel an der jeweiligen Einmündungsöffnung zum Saugrohr zu verursachen.

Diese Aufgabe wird erfindungsgemäß durch den Patentanspruch 1 gelöst. Vorteilhafte Weiterbildungen sind in den Unteransprüchen gekennzeichnet.

Da somit das Verschlußteil die Einmündungsöffnung bei einem langen Saugrohr in etwa bündig verschließt, entsteht in diesem Bereich praktisch kein Totraum. Damit entsteht in diesem Bereich kein Strömungsverlust bezüglich der Ansaugluft. In geöffnetem Zustand des Verschlußteils paßt sich aufgrund der geometrischen Form des Verschlußteils das Verschlußteil dem Ansaugluftstrom an, so daß es die vom Sammler herkommende Ansaugluft in die Einmündung lenkt, womit die Luftstromführung verbessert wird.

Aufgrund der Positionierung der Verschlußeinrichtung außerhalb des Einflußbereichs des Saugrohrs kann außerdem das bei der durch die obengenannte WO93/00505 auftretende "Klappern" der Klappen vermieden werden, das durch die im Ansaugtrakt einer Brennkraftmaschine auftretende pulsierende Rückströmung der Ansaugluft verursacht wird.

Ein weiterer Vorteil der Vorrichtung nach der Erfindung besteht darin, daß durch die besondere Positionierung der Verschlußeinrichtung beim Zu- bzw. Abschalten eines Saugrohrteils keine Kraft aufgebracht werden muß, die gegen einen Ansaugluftstrom überwunden werden muß. Damit kann in vorteilhafter Weise die Schaltleistung der Verschlußeinrichtung niedrig gehalten werden.

Durch die Ausbildung der Verschlußeinrichtung mit einer Luftleitwandung und einem Luftleitelement als Ansaugtrichter kann durch individuelle Ausbildung bezüglich deren Länge die wirksame Saugrohrlänge auf einfache Weise beeinflußt werden, so daß mit den gleichen Saugrohren, jedoch in einfacher Weise mit einer anderen Luftleitwandung und einem anderen Luftleitelement eine genaue Anpassung an den jeweiligen Typus der Brennkraftmaschine vorgenommen werden kann. Dies kann dann zweckmäßigerweise durch einen Austausch einer vorhandenen Verschlußeinrichtung gegen eine andere vorgenommen werden.

Durch die besondere Formgebung und Positionierung der Luftleitwandung und des Luftleitelements können weiter Abrißwirbel der Ansaugluft im Bereich der Einmündungsöffnung vermieden werden, so daß keine wirksame Schwächung des Durchtrittsquerschnitts der Saugrohre für die Ansaugluft auftritt.

Im folgenden sei die Erfindung anhand von sieben Figuren näher erläutert, die zwei Ausführungsbeispiele der Erfindung zeigen.

Es zeigen
Figur 1 eine erste Ausführungsform einer Luftansaugvorrichtung für eine Brennkraftmaschine in perspektivischer Darstellung teilweise im Schnitt;
Figur 2 einen Querschnitt durch die Luftansaugvorrichtung von Figur 1;
Figur 3 und 4 jeweils eine Einzelheit der Luftansaugvorrichtung;
Figur 5 ein Saugrohr mit einer Verschlußeinrichtung in vereinfachter Darstellung im Querschnitt nach einer zweiten Ausführungsform;
Figur 6 eine perspektivische Ansicht einer Verschlußeinrichtung von der Ansaugluft-Eintrittsseite der Verschlußeinrichtung aus gesehen; und
Figur 7 eine perspektivische Ansicht der Verschlußeinrichtung von Figur 2 mit Blick auf die Ansaugluft-Austrittsseite der Verschlußeinrichtung.

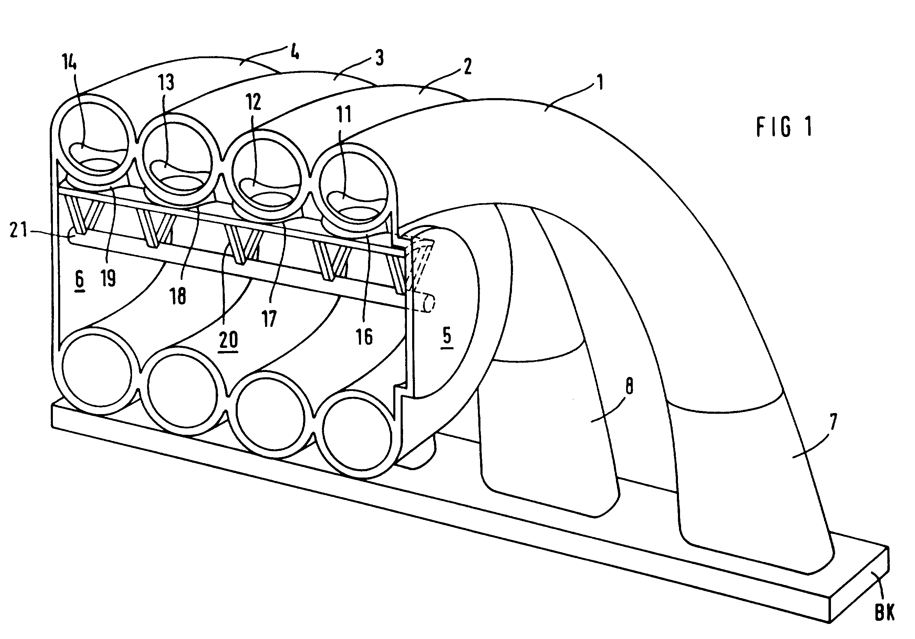

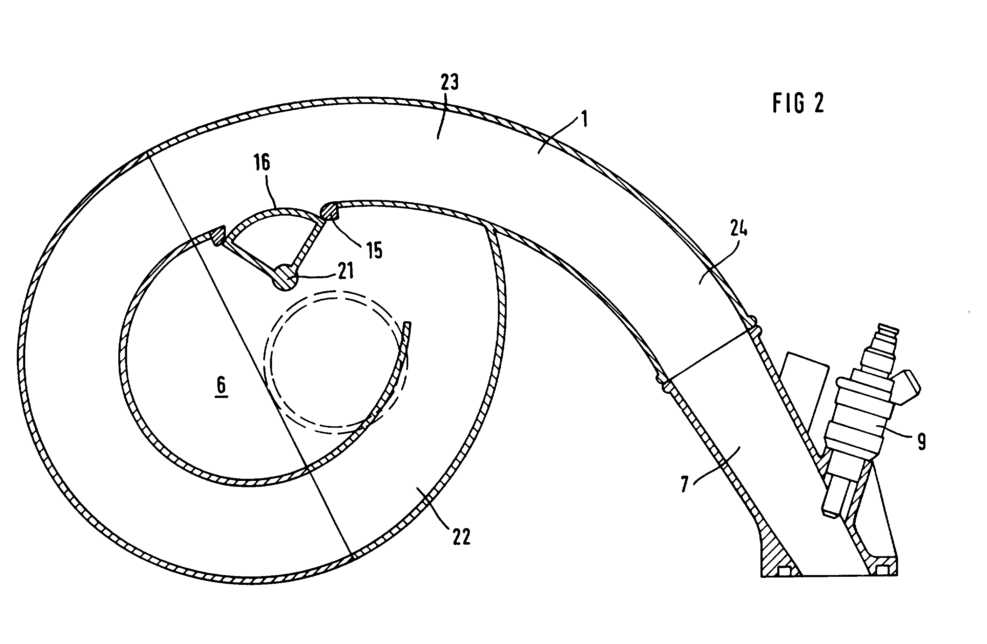

In Figur 1 ist eine Luftansaugvorrichtung gezeigt, die speziell für eine Vierzylinder-Brennkraftmaschine ausgebildet ist. Dementsprechend sind vier Saugrohre 1,2,3,4 vorgesehen, die bogenförmig geformt sind und an ihrem Saugeinlaß 5 mit einem Sammler 6 in Verbindung stehen, der mit einem nicht gezeigten Luftfilter verbunden ist. Am anderen Ende ist jedes Saugrohr mit einem Rohrstutzen (nur 7,8 gezeigt) für ein Einspritzventil (Ventil 9 gezeigt) und für die Luftzufuhr zum jeweiligen Brennraum der Brennkraftmaschine 10 (nur angedeutet) verbunden. Wie man aus den Figuren 1 und 2 gut erkennen kann, ist jedes Saugrohr an der der Brennkraftmaschine zugewandten Seite jeweils mit einem Durchbruch versehen, durch den jeweils Einmündungsöffnungen 11,12,13,14 gebildet werden. An dem dem Sammler 6 zugewandten Bereich ist jede Einmündungsöffnung mit einem umlaufenden Ansatz (Figur 2, Pos. 15) versehen. Jede Einmündungsöffnung kann durch eine Verschlußeinrichtung verschlossen werden, die im wesentlichen aus Verschlußteilen 16,17,18,19 besteht. Die Verschlußteile 16,17,18,19 sind beabstandet voneinander entsprechend dem Abstand der Einmündungsöffnungen auf einem gemeinsamen Träger 20 angeordnet, wobei die Verschlußteile in Art von Zylindermantel-Flächensegmenten ausgebildet sind, deren zentraler Teil auf einer gemeinsamen Schaltwelle 21 drehbar im Sammler 6 gelagert ist. Dabei kann die Welle so angeordnet werden, daß sie im wesentlichen außerhalb des Ansaugluftstroms liegt, so daß der Ansaugluftstrom nicht gestört wird.

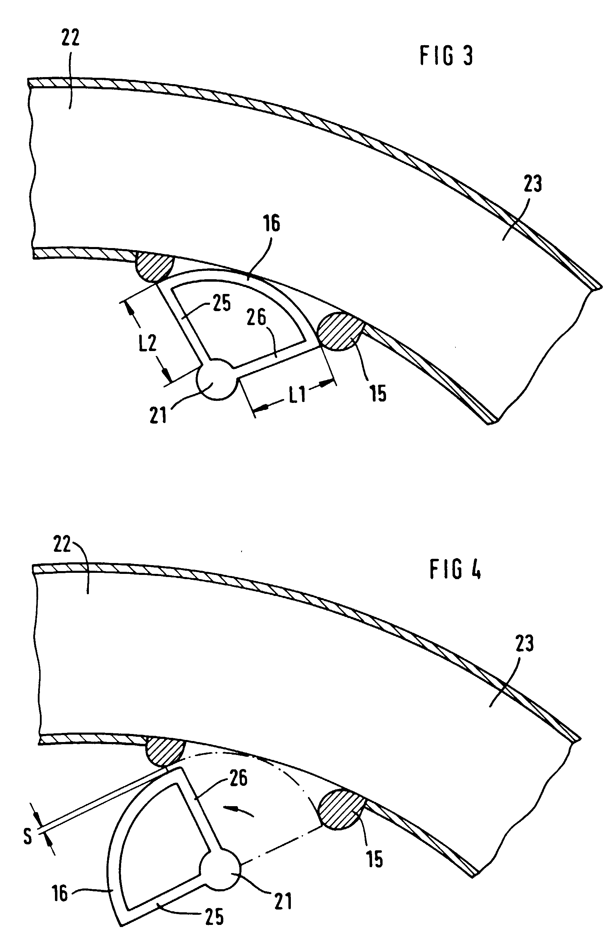

Die Verschlußeinrichtung kann weiter unsymmetrisch ausgebildet sein, so daß sich eine exzentrische Lagerung der Schaltwelle 21 ergibt, wodurch die Einmündungsöffnungen erst kurz vor Beendigung des Schließvorgangs der Verschlußeinrichtung dicht verschlossen werden. Dadurch können die Reibungsverluste beim Schließvorgang vermindert werden, was sich günstig auf den Antrieb der Verschlußeinrichtung auswirkt. Figur 3 und 4 zeigen dazu die Verschlußeinrichtung im Ausschnitt in zwei verschiedenen Stellungen. Figur 3 zeigt das Verschlußteil in der geschlossenen Stellung, Figur 4 in der geöffneten Stellung. Wie in Figur 3 angedeutet ist, weist das Verschlußteil zwei Stege 25 und 26 auf, die verschiedene Längen aufweisen, wobei der Steg 26 mit der Länge L1 etwas kürzer als der Steg mit der Länge L2 ausgebildet ist. Dadurch wird, wie aus Figur 4 erkennbar ist, im geöffneten Zustand des Verschlußteils ein Spalt S zwischen dem Ansatz 15 und dem Verschlußteil gebildet, so daß das Verschlußteil reibungsarm in seine Schließstellung gebracht werden kann.

Je nach dem Betriebszustand der Brennkraftmaschine können die Einmündungsöffnungen geöffnet oder geschlossen werden. Im geschlossenen Zustand durchläuft die in den Sammler 6 eintretende Ansaugluft einen Bereich 22 jedes Saugrohrs 1,2,3,4, einen weiteren Bereich 23 nach den verschlossenen Einmündungsöffnungen und einen dritten in etwa leicht gekrümmten Bereich 24, bis sie über die Rohrstutzen 7,8,.. in die Brennkammer der Brennkraftmaschine eintreten kann, so daß ein langer Ansaugluftweg gebildet wird.

Wenn im Gegensatz dazu durch den Träger die Verschlußteile verschwenkt werden, so daß die Einmündungöffnungen geöffnet werden, tritt der größte Teil der Ansaugluft unmittelbar in die zweiten Bereiche 23 und danach über die Bereiche 24 und die Rohrstutzen 7,8,.. in die Brennkammer der Brennkraftmaschine ein.

Wenn die Verschlußteile (16,17,18,19) entgegen dem Uhrzeigersinn verschwenkt werden, bildet die Mantelinnenfläche jedes Verschlußteils in vorteilhafter Weise eine Luftführung für die Ansaugluft, so daß Luftwirbel an den Einmündungsöffnungen vermieden werden können.

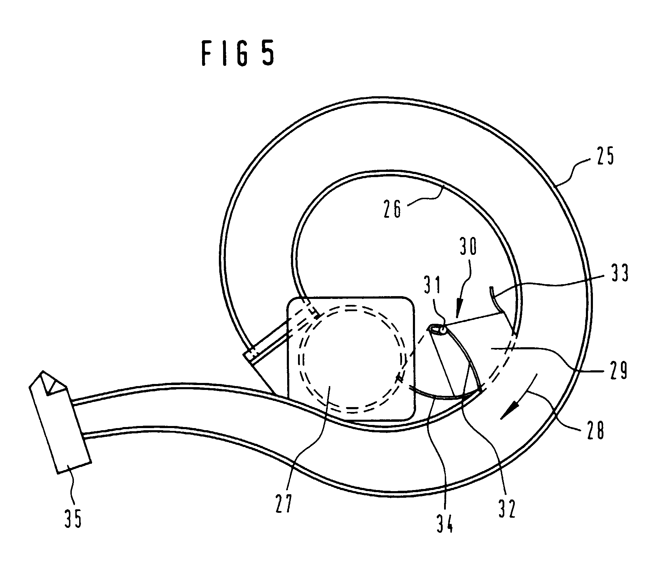

In Figur 5, die ein zweites Ausführungsbeispiel der Erfindung zeigt, ist ein Saugrohr 25 dargestellt, das stellvertretend für mehrere Saugrohre sein soll, dessen eines Ende mit einem Sammler 26 in Verbindung steht, der wiederum mit einer Drosselklappe (nicht gezeigt) in Verbindung steht, die hier als Drosselklappenstutzen 27 angedeutet ist und mit Ansaugluft versorgt wird. Das andere Ende des Saugrohrs 25 steht mit einem Zylinderkopfflansch 35 in Verbindung. Die angesaugte Luft mit den Pfeilen 28 angedeutet.

In einem vorgegebenen Abschnitt des Saugrohrs 25 weist das Saugrohr in seiner Wandung einen Durchbruch auf, der eine Einmündungsöffnung 29 bildet. Diese Einmündungsöffnung 29 ist unmittelbar mit dem Sammler 26 verbunden und durch eine Verschlußeinrichtung 30 entsprechend dem Betriebszustand der Brennkraftmaschine wahlweise verschließbar, was durch eine Motorsteuerung vorgenommen werden kann.

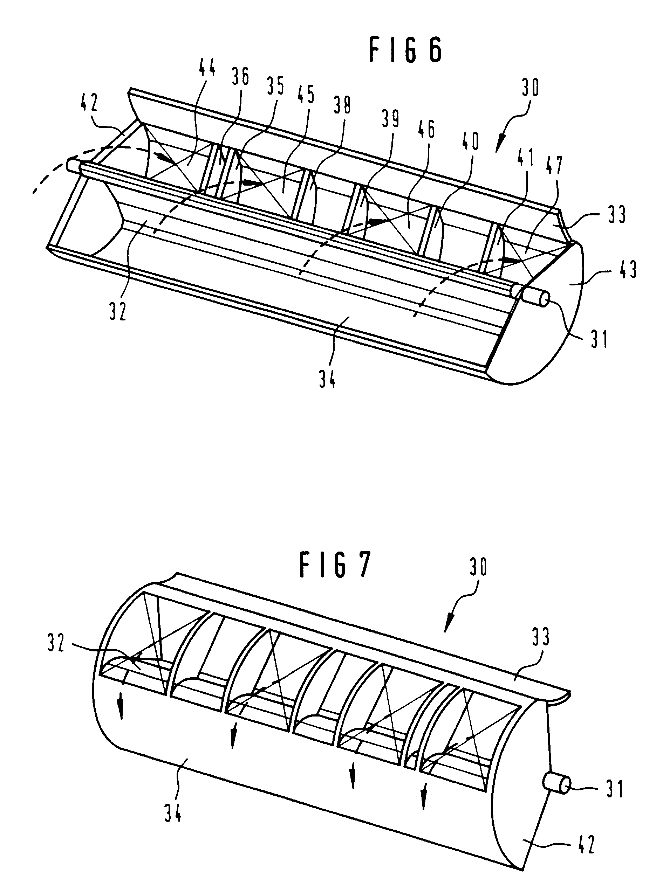

Die Verschlußeinrichtung 30, die in verschiedenen Ansichten ausführlich in Figur 6 und 7 gezeigt ist, besteht aus einer Drehachse 31, die in etwa mittig senkrecht zur Oberfläche der Einmündungsöffnung 29 im Sammler 26 gelagert ist. Mit dieser Drehachse 31 ist ein Verschlußmechanismus verbunden, der aus einer Luftleitwandung 32, einem Luftleitelement 33 sowie aus einem Verschlußteil 34, das als Zylindermantel-Flächensegment ausgebildet ist und das die Einmündungsöffnung 29 verschließen kann, besteht. Dabei ist das Verschlußteil 34 so geformt, daß es im die Einmündungsöffnung 29 verschließenden Zustand an den Ausschnitt der Einmündungsöffnung angepaßt ist. Die Luftleitwandung 32 und das Luftleitelement 33 sind außerdem so geformt, daß sie an den Ansaugluftstrom vom Sammler 26 in die Einmündungsöffnung 29 angepaßt sind, so daß eine Abrißbildung der angesaugten Luft bei offener Einmündungsöffnung an der Einmündungsstelle in das Saugrohr vermieden wird. Dazu weist die Luftleitwandung 32 eine den Ansaugluftstrom leitende leicht gekrümmte Form auf. Das Luftleitelement 33 erstreckt sich in Richtung auf den Sammler 26 und weist eine gekrümmte Form auf, die in Richtung auf den Sammler zusammen mit der Luftleitwandung 32 in etwa eine tulpenförmige Eintrittsöffnung bildet, worüber die Ansaugluft vom Sammler 26 in das Saugrohr 25 über die Einmündungsöffnung 29 geleitet wird. Durch die Einmündungsöffnung und den Hals, der durch das Luftleitelement 33 und die Luftleitwandung 32 gebildet wird, ist die effektive Saugrohrlänge zum Zylinderkopfflansch 35 um einen gewissen Betrag einstellbar, was durch einen Austausch der Verschlußeinrichtung 30 gegen eine andere Verschlußeinrichtung 30 mit anderen Maßen der Luftleitwandung und des Luftleitelementes vorgenommen werden kann, ohne Änderungen an den Saugrohren vornehmen zu müssen, so daß die Ansaugeinrichtung für die Brennkraftmaschine leicht an verschiedene Typen von Brennkraftmaschinen angepaßt werden kann.

Prinzipiell bildet jedes Luftleitelemnet und jede Luftleitwandung eine Verbindung zur jeweiligen Einmündungsöffnung zum Saugrohr. Wie jedoch ein Blick auf Figur 6 und 7 zeigt, ist die Verschlußeinrichtung so ausgebildet, daß alle Luftleitelemente und Luftleitwandungen zusammengefaßt sind, wobei Zwischenwände 36 bis 41 sowie Abschlußseitenwände 42, 43 vorgesehen sind, die entsprechend dem Abstand der einzelenen Saugrohre angeordnet sind, so daß einzelne Saugrohrbereiche (Kammern) 44 bis 47 gebildet werden.

## Patentansprüche

1. Luftansaugvorrichtung für eine Brennkraftmaschine, mit:
- einem Sammler (26) für die Ansaugluft, der zylinderförmig ausgebildet ist;
- mindestens einem Saugrohr (25) je Zylinder der Brennkraftmaschine, das den zugehörigen Zylinder mit dem Sammler (26) verbindet;
- je einer Einmündungsöffnung (29) in das Saugrohr (25);
- einer Verschlußeinrichtung (30), die ein Verschlußteil (34) und eine Drehachse (31) aufweist und durch die die Einmündungsöffnungen (29) durch eine Drehung der Verschlußeinrichtung (30) um einen vorgegebenen Winkel verschließbar sind, wobei die Drehachse (31) in etwa parallel zu der Längsachse des zylinderförmigen Sammlers (26) gelagert ist; **dadurch gekennzeichnet**,
- daß die Verschlußeinrichtung (30) zylindersektorförmig ausgebildet ist,
- daß sie Kammern (44 bis 47) aufweist, die entsprechend dem Abstand der einzelnen Saugrohre (25) voneinander beabstandet sind und die mit Durchtrittsöffnungen versehen sind,
- daß die Verschlußeinrichtung (30) um ihre Drehachse (31) innerhalb des Sammlers (26) schwenkbar ist, so daß sie in einer ersten Stellung die Einmündungsöffnungen (29) mit dem Verschlußteil (34) verschließt und sie in einer zweiten Stellung die Einmündungsöffnungen (29) freigibt, wobei dann die Luft von dem Sammler (26) in die Kammern (44 bis 47) und durch die Durchtrittsöffnungen hin zu den Einmündungsöffnungen strömt.

2. Luftansaugvorrichtung nach Anspruch 1, **dadurch gekennzeichnet,** daß das Verschlußteil (34) über eine Luftleitwandung (32) mit der Drehachse (31) im Sammler (26) in Verbindung steht, und daß die Luftleitwandung (32) einen Wandbereich der Kammern (44 bis 47) bildet.

3. Luftansaugvorrichtung nach Anspruch 2, **dadurch gekennzeichnet,** daß in einem Abstand der Luftleitwandung (32) entsprechend der wirksamen Breite der Einmündungsöffnung (29) zum Saugrohr (25) ein Luftleitelement (33) vorgesehen ist, das sich über eine vorgegebene Länge in den Sammler (26) hinein erstreckt.

4. Luftansaugvorrichtung nach Anspruch 3, **dadurch gekennzeichnet,** daß die Luftleitwandung (32) eine leicht gekrümmte, den Ansaugluftstrom vom Sammler (26) leitende Form aufweist, wodurch zusammen mit dem Luftleitelement (33) eine in etwa tulpenförmige Ansaugöffnung gebildet wird.

5. Luftansaugvorrichtung nach Anspruch 4, **dadurch gekennzeichnet,** daß das Luftleitelement (33) und die Luftleitwandung (32) entsprechend ihrer jeweiligen Länge und der Längen von Zwischenwänden (36 bis 41), die zusammen einen Ansaugbereichsabschnitt bilden, eine Saugrohrverlängerung bilden.

6. Luftansaugvorrichtung nach einem der Ansprüche 1 bis 5, **dadurch gekennzeichnet,** daßim Bereich jeder Einmündungsöffnung zumindest ein in Richtung auf den Sammler ragender und umlaufender Ansatz (15) vorgesehen ist, an welchem jedes Verschlußteil im geschlossenen Zustand einer jeden Einmündungsöffnung anliegt.

## Claims

1. Air intake device for an internal combustion engine, with:
- a manifold (26) for the intake air, said manifold being designed cylindrically;
- at least one suction pipe (25) for each cylinder of the internal combustion engine, said suction pipe connecting the associated cylinder to the manifold (26);
- an entry port (29) into each suction pipe (25);
- a closing device (30) which has a closing part (34) and a rotary shaft (31) and by means of which the entry ports (29) can be closed by rotating the closing device (30) through a predetermined angle, the rotary shaft (31) being mounted approximately parallel to the longitudinal axis of the cylindrical manifold (26);
characterized
- in that the closing device (30) is designed in the form of a cylinder sector,
- in that it has chambers (44 to 47) which are spaced apart from one another according to the spacing of the individual suction pipes (25) and which are provided with passage ports,
- in that the closing device (30) is pivotable about its rotary shaft (31) within the manifold (26), so that, in a first position, said closing device closes the entry ports (29) by means of the closing part (34) and, in a second position, opens the entry ports (29), the air then flowing from the manifold (26) into the chambers (44 to 47) and through the passage ports towards the entry ports.

2. Air intake device according to Claim 1, characterized in that the closing part (34) is connected to the rotary shaft (31) in the manifold (26) via an air guide wall (32), and in that the air guide wall (32) forms a wall region of the chambers (44 to 47).

3. Air intake device according to Claim 2, characterized in that an air guide element (33) is provided at a distance from the air guide wall (32) corresponding to the effective width of the entry port (29) to the suction pipe (25) and extends over a predetermined length into the manifold (26).

4. Air intake device according to Claim 3, characterized in that the air guide wall (32) has a slightly curved shape guiding the intake air stream from the manifold (26), with the result that, together with the air guide element (33), an approximately tulip-shaped intake port is formed.

5. Air intake device according to Claim 4, characterized in that the air guide element (33) and the air guide wall (32) form a suction pipe prolongation according to their respective length and the lengths of intermediate walls (36 to 41) which together form an intake region portion.

6. Air intake device according to one of Claims 1 to 5, characterized in that there is provided, in the region of each entry port, at least one peripheral extension (15) which projects in the direction of the manifold and against which each closing part bears when each entry port is in the closed state.

## Revendications

1. Dispositif d'aspiration d'air pour un moteur à combustion interne, comportant:
- un collecteur (26) pour l'air d'aspiration, qui présente une forme de cylindre,
- au moins un tube d'aspiration (25) par cylindre du moteur à combustion interne, reliant le cylindre correspondant au collecteur (26),
- un orifice d'entrée (29) dans chaque tube d'aspiration (25),
- un dispositif de fermeture (30) qui présente une pièce de fermeture (34) et un axe de rotation (31) et par lesquels les orifices d'entrée (29) peuvent être fermés, en faisant tourner d'un angle prédéfini le dispositif de fermeture (30), l'axe de rotation (31) étant monté sensiblement parallèle à l'axe longitudinal du collecteur (26) en forme de cylindre,
caractérisé
- en ce que le dispositif de fermeture (30) est réalisé sous la forme d'un secteur cylindrique,
- en ce qu'il présente des chambres (44 à 47) qui sont à une distance les unes des autres correspondant à la distance des différents tubes d'aspiration (25),
- en ce que le dispositif de fermeture (30) peut pivoter autour de son axe de rotation (31) dans le collecteur (26), de telle façon que, dans une première position, il ferme les orifices d'entrée (29) avec la pièce de fermeture (34) et que, dans une deuxième position, il libère les orifices d'entrée (29), l'air s'écoulant alors du collecteur (26) dans les chambres (44 à 47) et, en traversant les orifices de passage, vers les orifices d'entrée.

2. Dispositif d'aspiration d'air suivant la revendication 1, caractérisé en ce que la pièce de fermeture (34) est reliée, par l'intermédiaire d'une paroi de guidage de l'air (32), à l'axe de rotation (31) dans le collecteur (26) et en ce que la paroi de guidage de l'air (32) forme une zone de paroi pour les chambres (44 à 47).

3. Dispositif d'aspiration d'air suivant la revendication 2, caractérisé en ce qu'à une distance de la paroi de guidage de l'air (32) correspondant à la largeur efficace de l'orifice d'entrée (29) par rapport au tube d'aspiration (25), il est prévu un élément de guidage de l'air (33) qui, sur une longueur prédéfinie, s'étend à l'intérieur du collecteur (26).

4. Dispositif d'aspiration d'air suivant la revendication 3, caractérisé en ce que la paroi de guidage de l'air (32) présente une forme légèrement courbe dirigeant le courant d'air d'aspiration provenant du collecteur (26), en formant, avec l'élément de guidage de l'air (33), une ouvertures d'aspiration sensiblement en forme de tulipe.

5. Dispositif d'aspiration d'air suivant la revendication 4, caractérisé en ce que l'élément de guidage de l'air (33) et la paroi de guidage de l'air (32) réalisent une prolongation du tube d'aspiration correspondant à chacune de leurs longueurs et aux longueurs des parois intercalaires (36 à 41), et forment, ensemble, une partie de la zone d'aspiration.

6. Dispositif d'aspiration d'air suivant l'une des revendications 1 à 5, caractérisé en ce que, dans la zone de chacun des orifices d'entrée, il est prévu au moins un rebord (15), en faisant le tour et faisant saillie en direction du collecteur, rebord sur lequel repose chacune des pièces de fermeture, quand chacun des orifices d'entrée correspondants est fermé.
